# EUROPÄISCHE PATENTSCHRIFT

(11) **EP 3 054 251 B1**
(45) Veröffentlichungstag und Bekanntmachung des Hinweises auf die Patenterteilung: **19.07.2017**
(21) Anmeldenummer: 16000048.5
(22) Anmeldetag: 12.01.2016
(51) Int. Cl.: F28D 21/00, F28G 1/16, F28D 7/08

(54) **WÄRMETAUSCHER FÜR ABWASSER MIT PUFFERSPEICHERUNG**
HEAT EXCHANGER FOR WASTEWATER HAVING BUFFER STORAGE
ÉCHANGEUR THERMIQUE POUR EAUX USEES DOTE D'UN RESERVOIR D'ACCUMULATION

(30) Priorität: 03.02.2015 AT 472015
(43) Veröffentlichungstag der Anmeldung: 10.08.2016
(73) Patentinhaber: Ennemoser, Johannes Paul, 4725 Sankt Aegidi (AT)
(72) Erfinder: Ennemoser, Johannes Paul, 4725 Sankt Aegidi (AT)
(74) Vertreter: Margotti, Herwig Franz

(56) Entgegenhaltungen:
- WO-A1-93/18362
- WO-A1-2004/079286
- WO-A2-2011/094777
- DE-A1- 3 006 119
- US-A1- 2012 159 980

## Beschreibung

Die Erfindung betrifft einen Wärmetauscher für Abwasser mit Pufferspeicherung mit mehreren Stufen für die Wärmerückgewinnung in denen sich die Rohrwärmetauscher befinden. WO-A-2011/094777 offenbart einen Wärmetauscher für Abwasser mit Pufferspeicherung aus einem Pufferspeicher mit einem Ventil, welches als flexibler, durch einen Hebevorrichtung anhebbarer oder absenkbarer Schlauch ausgeführt ist.

Der Erfindung liegt somit die Aufgabe Zugrunde die thermische Energie von Abwasser in einem Pufferspeicher zu speichern und diese über Rohrwärmetauscher mit einem möglichst hohen Wärmerückgewinnungsgrad abzugeben.

Die Aufgabe der Erfindung wird dadurch gelöst, dass der Pufferspeicher aus einem Behälter besteht, der durch versetzte, schräg angebrachte Trennwände in mehrere Stufen unterteilt wird und die Länge sowie der Querschnitt der Ablussleitung so gewählt wird, dass der Strömungswiderstand relativ hoch ist.

Die konstruktive Trennung der einzelnen Stufen für die Wärmerückgewinnung erfolgt durch zwei versetzte Trennwände, die schräg angebracht werden. Die versetzten Trennwände ermöglichen das Abfließen des Abwassers vom unteren Bereich der einzelnen Stufen für die Wärmerückgewinnung in den oberen Bereich der folgenden Stufe. Die schräge Anordnung der Trennwände ermöglicht eine einfache Reinigung der Rohrwärmetauscher.

Am Boden der ersten Stufe wird die Hautabflussleitung angebracht, die über ein Ventil oder ähnliches mit dem Abwasser Abfluss verbunden ist. Am Boden der zweiten bis letzten Stufe wird eine Abflussleitung an die Hauptabflussleitung angeschlossen, dessen Länge und Querschnitt so ausgelegt wird, dass der Strömungswiderstand relativ hoch ist.

Wird das Ventil geschlossen fließt das Abwasser über den Abwasser Zulauf in die erste Stufe der Wärmerückgewinnung und über die Abflussleitungen in die weiteren Stufen der Wärmerückgewinnung bis der Pufferspeicher befüllt ist.

Aufgrund des relativ hohen Strömungswiderstandes der Abflussleitungen fließt das Abwasser im Betriebszustand jedoch über den jeweiligen Abwasser Überlauf in die nächste Stufe bis zum Abwasser Ablauf.

Das Ventil wird regelmäßig geöffnet, wodurch die Verunreinigungen im Pufferspeicher in den Abwasser Ablauf abfließen können.

Die Rohrwärmetauscher werden so verbunden, dass das Wärmeträger Medium vom unteren Bereich der letzten Stufe in den oberen Bereich der ersten Stufe geleitet wird, wodurch eine Querstrom Wärmeübertragung erfolgt.

Die Rohrwärmetauscher werden versetzt angebracht und mit einer glatten bis glänzenden Oberfläche ausgeführt, wodurch dessen Reinigung durch eine oberhalb angebrachte Spülvorrichtung optimiert wird.

Aufgrund der asynchronen Entleerung der einzelnen Stufen kann das Abwasser der letzten Stufen für die Reinigung der Rohrwärmetauscher verwendet werden.

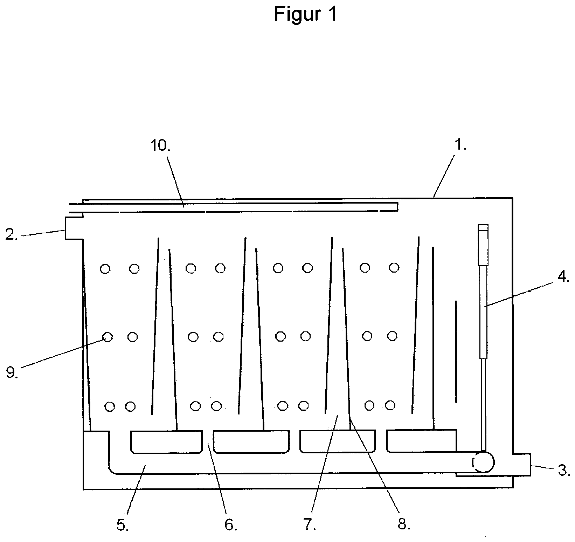

Beschreibung der Funktionsweise anhand der Figur 1, die einen schematischen Querschnitt des Wärmetauschers für Abwasser mit Pufferspeicherung zeigt. Das Ventil 4 wurde als flexibler Schlauch, der durch eine Hebevorrichtung angehoben und abgesenkt werden kann dargestellt. Die Hebevorrichtung wurde als Linearmotor ausgeführt.

Sobald der flexible Schlauch durch den Linearmotor angehoben wird sammelt sich das Abwasser im Pufferspeicher 1. Das Abwasser gelangt über den Abwasser Zulauf 2 in die erste Stufe der Wärmerückgewinnung. Das Abwasser strömt von der Hauptabflussleitung 5 über die Abflussleitungen 6 in die weiteren Stufen der Wärmerückgewinnung bis der gesamte Pufferspeicher 1 befüllt ist. Aufgrund des relativ hohen Strömungswiderstandes der Abflussleitung strömt das Abwasser im Betrieb jedoch über den Abwasser Überlauf 7 in die nächste Stufe bis zum Abwasser Ablauf 3. Das Wärmeträger Medium in den Rohrwärmetauschern 9 fließt im Querstromprinzip durch alle Stufen der Wärmerückgewinnung.

## Patentansprüche

1. Wärmetauscher für Abwasser mit Pufferspeicherung aus einem Pufferspeicher (1) mit einem Ventil (4), welches als flexibler, durch einen Linearmotor anhebbarer oder absenkbarer Schlauch ausgeführt ist, **dadurch gekennzeichnet, dass** versetzt angeordnete Rohrwärmetauscher (9) im Pufferspeicher (1) vorgesehen sind und dass der Pufferspeicher (1) durch jeweils zwei versetzte, schräg angebrachte Trennwände (8) in zwei oder mehrere Stufen für die Wärmerückgewinnung unterteilt ist.

2. Wärmetauscher für Abwasser mit Pufferspeicherung nach Anspruch 1, **dadurch gekennzeichnet, dass** am Boden der ersten Stufe die Hauptabflussleitung (5) angebracht ist, die mit einem Ventil (4) verbunden ist.

3. Wärmetauscher für Abwasser mit Pufferspeicherung nach einem der Ansprüche 1 bis 2, **dadurch gekennzeichnet, dass** am Boden der zweiten bis letzten Stufe eine Abflussleitung (6) mit hohem Strömungswiderstand angebracht ist, die mit der Hauptabflussleitung (5) verbunden ist.

4. Wärmetauscher für Abwasser mit Pufferspeicherung nach einem der Ansprüche 1 bis 3, **dadurch gekennzeichnet, dass** die Rohrwärmetauscher (9) versetzt angebracht und mit einer glatten bis glänzenden Oberfläche versehen sind.

5. Wärmetauscher für Abwasser mit Pufferspeicherung nach einem der Ansprüche 1 bis 4, **dadurch gekennzeichnet, dass** die Reinigung der Rohrwärmetauscher (9) mit einer Spülvorrichtung (10) erfolgt, die das vorgereinigte Abwasser der letzten Stufe oder der letzten Stufen verwendet.

## Claims

1. A heat exchanger for wastewater with buffer storage from a buffer storage (1) having a valve (4), which is embodied as a flexible hose that may be raised or lowered by a linear motor, **characterized in that** offset-arranged tube heat exchangers (9) are provided within the buffer storage (1) and that the buffer storage (1) is divided by respectively two offset and inclined-mounted dividing walls (8) into two or more steps for heat recovery.

2. A heat exchanger for wastewater having buffer storage according to claim 1, **characterized in that** at the bottom of the first step there is mounted the main discharge line (5), which is connected to a valve (4).

3. A heat exchanger for wastewater having buffer storage according to any of claims 1 to 2, **characterized in that** at the bottom of the second to last step there is mounted a discharge line (6) having a high flow resistance, which is connected to the main discharge line (5).

4. A heat exchanger for wastewater having buffer storage according to any of claims 1 to 3, **characterized in that** the tube heat exchangers (9) are mounted in an offset way and provided with a smooth to polished surface.

5. A heat exchanger for wastewater having buffer storage according to any of claims 1 to 4, **characterized in that** cleaning of the tube heat exchangers (9) is realized by means of a flushing device (10), which uses the pre-purified wastewater of the last step or the last steps.

## Revendications

1. Échangeur de chaleur pour eaux usées avec stockage tampon à partir d'un accumulateur tampon (1) doté d'une valve (4), celui-ci étant réalisé sous la forme d'un tuyau flexible susceptible d'être soulevé ou abaissé au moyen d'un moteur linéaire,
**caractérisé en ce que** des échangeurs de chaleur tubulaires (9) agencés en décalage sont prévus dans l'accumulateur tampon (1), et **en ce que** l'accumulateur tampon (1) est subdivisé en deux ou plusieurs étages pour la récupération de chaleur, par deux parois de séparation respectives (8) décalées et disposées en oblique.

2. Échangeur de chaleur pour eaux usées avec stockage tampon selon la revendication 1,
**caractérisé en ce que** la conduite d'évacuation principale (5) est agencée au fond du premier étage, ladite conduite étant reliée à une valve (4).

3. Échangeur de chaleur pour eaux usées avec stockage tampon selon l'une des revendications 1 et 2, **caractérisé en ce qu'**une conduite d'évacuation (6) présentant une forte résistance à l'écoulement est agencée au fond du second étage jusqu'au dernier étage, ladite conduite étant reliée à la conduite d'évacuation principale (5).

4. Échangeur de chaleur pour eaux usées avec stockage tampon selon l'une des revendications 1 à 3, **caractérisé en ce que** les échangeurs de chaleur tubulaires (9) sont agencés en décalage et sont dotés d'une surface lisse à luisante.

5. Échangeur de chaleur pour eaux usées avec stockage tampon selon l'une des revendications 1 à 4, **caractérisé en ce que** le nettoyage des échangeurs de chaleur tubulaire (9) a lieu au moyen d'un dispositif de rinçage (10) qui utilise les eaux usées préalablement purifiées du dernier étage ou des derniers étages.
